# EUROPÄISCHE PATENTANMELDUNG

(11) **EP 4 389 656 A1**
(43) Veröffentlichungstag der Anmeldung: **26.06.2024**
(21) Anmeldenummer: 22216501.1
(22) Anmeldetag: 23.12.2022
(51) Int. Cl.: B65G 47/53, B65G 47/68, B65G 47/70, B65G 47/71, B65G 43/10

(54) **VERFAHREN UND SINGULATOR ZUM SINGULIEREN VON GEPÄCKSTÜCKEN**

(71) Anmelder: Siemens Logistics GmbH, 90429 Nürnberg (DE)
(72) Erfinder: Schwinge, Christian, 90556 Cadolzburg (DE)
(74) Vertreter: Siemens Patent Attorneys

(57) **Zusammenfassung**

Die Erfindung betrifft ein Verfahren zu Singulieren von Stückgütern (14), insbesondere Gepäckstücken (14), mit einem Singulator (2), umfassend eine einen Aufnahmeabschnitt (6) und einen Segmentabschnitt (8) aufweisende Zuführstrecke (4) und eine Abführstrecke (12). Der Aufnahmeabschnitts (6) mündet in den Segmentabschnitt (8). Der Segmentabschnitt (8) mündet quer oder schräg in die Abführstrecke (12). Der Segmentabschnitt (8) weist mindestens zwei, insbesondere vier, individuell antreibbare, nebeneinander und parallel zu einer Zuführrichtung (104) des Segmentabschnitts (8) angeordnete Segmente (10) auf, die sich jeweils vom Anfang bis zum Ende des Segmentabschnitts (8) erstrecken. Das Verfahren umfasst die Verfahrensschritte:
a) Befüllen des Aufnahmeabschnitts (6) mit Stückgütern (14).
b) Transportieren von Stückgütern (14) vom Aufnahmeabschnitt (6) auf den Segmentabschnitt (8).
c) Auswählen eines Segments (10) als bevorzugtes Segment (10) .
d) bevorzugtes Antreiben des bevorzugten Segments (10).
e) Überführen von einem oder allen auf dem bevorzugten Segment (10) aufliegenden Stückgütern (14) auf die Abführstrecke (12) .
f) wiederholte Durchführung der Verfahrensschritte c bis e.

Die Erfindung betrifft zudem den Singulator (2) ausgestaltet zur Durchführung des Verfahrens.

## Beschreibung

Die vorliegende Erfindung bezieht sich auf ein Verfahren und einen Singulator zum Singulieren von Stückgütern, insbesondere Gepäckstücken, gemäß den unabhängigen Patentansprüchen.

Die vorliegende Erfindung betrifft insbesondere das Überführen von Stückgütern, noch insbesonderer Gepäckstücken, aus einem Grossbehälter (Unitary Load Device ULD o.ä.) auf ein Fördersystem. Bei einer Entladung eines Grossbehälters durch Kippen verbleiben die Gepäckstücke in der Regel in undefinierter Lage (nebeneinander und/oder übereinander und/oder verkeilt) auf dem Förderband.

Im Gegensatz zur technisch entwickelten und zur Verfügung stehenden Vereinzelung von Stückgut in Post-/Paketanwendungen ist diese Funktion im Flughafenumfeld nicht verfügbar. Im Flughafenumfeld werden die mit Gepäckstücken befüllten Großbehälter in der Regel von Hand entladen, bevor die Stückgüter in einer Sortieranlage sortiert werden. Für eine effiziente Sortierung ist jedoch zuvor eine Vereinzelung erforderlich.

Jedoch setzt sich auch im Flughafenbereich die Verwendung von Entladehilfen und/oder (teil-) automatischen Entladevorrichtungen, die durch Kippen entladen, mehr und mehr durch, das Problem der Vereinzelung bleibt jedoch bestehen. Gängige Vereinzelungsmethoden durch hintereinander angeordnete Förderbänder und deren Antreiben mit Geschwindigkeitssprüngen löst das Problem der Verkeilung nur unzureichend, vereinzelt nur in einer Richtung und hat zudem einen großen Platzbedarf.

Der vorliegenden Erfindung liegt daher die Aufgabe zugrunde, ein verbessertes Verfahren und einen verbesserten Singulator zum Singulieren von Stückgütern, insbesondere Gepäckstücken, bereitzustellen. Diese Aufgabe wird durch die in den unabhängigen Ansprüchen beschriebenen Lösungen gelöst.

Gelöst wird diese Aufgabe durch eine Vorrichtung und ein Verfahren mit den Merkmalen der Hauptansprüche. Vorteilhafte Ausgestaltungen der Erfindung ergeben sich aus den Unteransprüchen.

Die erfindungsgemäße Lösung betrifft ein Verfahren zu Singulieren von Stückgütern, insbesondere Gepäckstücken, mit einem Singulator, umfassend eine einen Aufnahmeabschnitt und einen Segmentabschnitt aufweisende Zuführstrecke mit einer Zuführrichtung und eine Abführstrecke mit einer Abführrichtung. Ein Ende des Aufnahmeabschnitts mündet in einen Anfang des Segmentabschnitts und ist auf gleicher Höhe oder oberhalb des Anfangs des Segmentabschnitts angeordnet. Ein Ende des Segmentabschnitts mündet quer oder schräg in die Abführstrecke und ist auf gleicher Höhe oder oberhalb der Abführstrecke angeordnet. Der Aufnahmeabschnitt individuell ist antreibbar und zur Aufnahme einer Vielzahl ungeordneter Stückgüter ausgestaltet. Der Segmentabschnitt weist mindestens zwei, insbesondere vier, individuell antreibbare, nebeneinander und parallel zur Zuführrichtung des Segmentabschnitts angeordnete Segmente auf und ein Segment erstreckt sich jeweils vom Anfang bis zum Ende des Segmentabschnitts. Das Verfahren umfasst die Verfahrensschritte:
a) Befüllen des Aufnahmeabschnitts mit einer Vielzahl ungeordneter Stückgüter.
b) Transportieren von Stückgüter auf dem Aufnahmeabschnitt entlang der Zuführrichtung hin zum und auf den Segmentabschnitt.
c) Auswählen eines Segments als bevorzugtes Segment.
d) Bevorzugtes Antreiben des bevorzugten Segments und nicht-bevorzugtes Antreiben der nicht bevorzugten Segmente.
e) Überführen von einem oder allen auf dem bevorzugten Segment aufliegenden Stückgütern auf die Abführstrecke.
f) Wiederholte Durchführung der Verfahrensschritte c bis e.

Die erfindungsgemäße Lösung betrifft zudem einen Singulator zum Singulieren von Stückgütern, insbesondere Gepäckstücken, umfassend eine einen Aufnahmeabschnitt und einen Segmentabschnitt aufweisende Zuführstrecke mit einer Zuführrichtung, eine Abführstrecke mit einer Abführrichtung. Ein Ende des Aufnahmeabschnitts mündet in einen Anfang des Segmentabschnitts und ist auf gleicher Höhe oder oberhalb des Anfangs des Segmentabschnitts angeordnet. Ein Ende des Segmentabschnitts mündet quer oder schräg in die Abführstrecke und ist auf gleicher Höhe oder oberhalb der Abführstrecke angeordnet. Der Aufnahmeabschnitt individuell ist antreibbar und zur Aufnahme einer Vielzahl ungeordneter Stückgüter ausgestaltet.

Der Segmentabschnitt weist mindestens zwei, insbesondere vier, individuell antreibbare, nebeneinander und parallel zur Zuführrichtung des Segmentabschnitts angeordnete Segmente auf und ein Segment erstreckt sich jeweils vom Anfang bis zum Ende des Segmentabschnitts. Der Singulator umfasst Mittel zur Durchführung des erfindungsgemäßen Verfahrens.

Die erfindungsgemäße Lösung betrifft zudem ein Fördersystem, umfassend einen erfindungsgemäßen Singulator.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Die erfindungsgemäße Lösung ermöglicht mit einfachen technischen Mitteln und auf unkomplizierte Art und Weise eine Singulation. Vorteilhafte Ausgestaltungen der Erfindung ergeben sich aus den Unteransprüchen.

Gemäß einer Ausführungsform kann ein Erfassen einer Anordnung der Stückgüter auf der Zuführstrecke, insbesondere auf dem Segmentabschnitt, erfolgen, wobei das Auswählen des bevorzugten Segments in Abhängigkeit von der erfassten Anordnung der Stückgüter auf der Zuführstrecke, insbesondere auf dem Segmentabschnitt, erfolgen kann.

Gemäß einer weiteren Ausführungsform kann das Mittel hierzu eine Detektionseinheit aufweisen, wobei die Detektionseinheit oberhalb der Zuführstrecke, insbesondere oberhalb des Segmentabschnitts, angeordnet sein kann und zum Erfassen einer Anordnung der Stückgüter auf der Zuführstrecke ausgestaltet sein kann. Gemäß einer weiteren Ausführungsform kann in Abhängigkeit von der erfassten Anordnung der Stückgüter auf dem Aufnahmeabschnitt der Zuführstrecke eine Ansteuerung des Aufnahmeabschnitts im Verfahrensschritt b) geregelt werden.

So kann vermieden werden, dass leere Segmente unnötig angetrieben werden, und es kann eine effizientere Auswahl des bevorzugten Segments erfolgen. Dennoch kann eine Singulation auch ohne Erfassung der Anordnung der Stückgüter erzielt werden.

Gemäß einer weiteren Ausführungsform kann das bevorzugte Segment dasjenige Segment sein, auf dem stromabwärts in Bezug auf die Abführrichtung und/oder die Zuführrichtung zuvorderst ein Stückgut aufliegt.

Gemäß einer weiteren Ausführungsform kann im Verfahrensschritt c) zunächst das in Bezug auf die Abführrichtung am weitesten flussabwärts angeordnete Segment als bevorzugtes Segment ausgewählt werden. Und nach dem Überführen des einen oder aller auf dem bevorzugten Segment aufliegenden Stückgüter auf die Abführstrecke im Verfahrensschritt e) kann dasjenige Segment neu als bevorzugtes Segment ausgewählt werden, das in Bezug auf die Abführrichtung flussaufwärts unmittelbar neben dem bisher bevorzugten Segment angeordnet ist und wenn flussaufwärts kein weiteres Segment benachbart ist, kann das in Bezug auf die Abführrichtung am weitesten flussabwärts angeordnete Segment als bevorzugtes Segment ausgewählt werden. So wird auch ohne bekannte Anordnung der Stückgüter eine effiziente Vereinzelung erzielt.

Gemäß einer weiteren Ausführungsform kann das bevorzugte Antreiben ein alleiniges oder schnelleres Antreiben als das nicht-bevorzugte Antreiben sein, wenn auf benachbarten Segmenten weitere Stückgüter im Wesentlichen auf gleicher Höhe in Bezug auf die Zuführrichtung aufliegen oder wenn die Position weiterer Stückgüter nicht bekannt ist. Und das nicht-bevorzugte Antreiben kann ein Anhalten und/oder ein gleich schnelles und/oder langsameres Antreiben als das bevorzugte Antreiben sein. So wird sichergestellt, dass ein einzelnes Stückgut, nämlich das (zuvorderst) auf dem bevorzugt angetriebenen Segment aufliegendes Stückgut als erstes bzw. zuvorderst das Ende des Segmentabschnitts erreicht. Wenn auf dem bevorzugten Segment ein Stückgut in Flussrichtung weit zuvorderst aufliegt und auf den nicht-bevorzugten Segmenten Stückgüter weiter flussaufwärts aufliegen, kann auch bei gleich schnellem bevorzugten und nicht bevorzugten Antreiben eine Vereinzelung erzielt werden.

Gemäß einer weiteren Ausführungsform können zwei oder mehr Segmente als bevorzugtes Segment ausgewählt und im Fall von benachbarten Segmenten gleichartig und im Fall von nicht-benachbarten Segmenten verschiedenartig oder gleichartig angetrieben werden. So kann ein aufgrund seiner Größe oder Anordnung auf mehr als einem Segment aufliegendes Stückgut genauso behandelt werden wie ein auf nur einem einzelnen Segment aufliegendes Stückgut.

Gemäß einer weiteren Ausführungsform kann das Mittel eine Steuereinheit aufweisen, wobei die Steuereinheit ausgestaltet sein kann, Fördermittel des Aufnahmeabschnitts, der Segmente und der Abführstrecke anzusteuern.

Gemäß einer weiteren Ausführungsform kann die Steuereinheit ausgestaltet sein, die Fördermittel in Abhängigkeit von den von den Detektionseinheiten erfassten Stückgütern anzusteuern.

Gemäß einer weiteren Ausführungsform kann das Verfahren zudem die Verfahrensschritte umfassen, um einen ungeordneten Haufen übereinander liegender Stückgüter zu erzeugen und um auf unkomplizierte Weise ein rasches Entleeren eines Großbehälters zu erreichen: Kippen eines mit Stückgütern gefüllten Großbehälters um eine am Anfang des Aufnahmeabschnitts, quer zur Zuführrichtung angeordnete Kippachse herum, auf den Aufnahmeabschnitt und anschließendes Zurückkippen des Großbehälters.

Gemäß einer weiteren Ausführungsform kann das Drehen bzw. Kippen des Aufnahmeabschnitts um die Kippachse derart erfolgen, dass das Ende des Aufnahmeabschnitts angehoben wird und der Aufnahmeabschnitt den Großbehälter verschließt und anschließend kann ein Zurückdrehen bzw. Zurückkippen des Aufnahmeabschnitts gemeinsam mit dem Großbehälter erfolgen.

Gemäß einer weiteren Ausführungsform kann das Verfahren zudem umfassend die Verfahrensschritte umfassen:
- Erfassen eines Füllgrads des Großbehälters nach dem Zurücckippen des Großbehälter.
- Wiederholte Durchführung des Kippens und Zurückkippens des Großbehälters, wenn noch Stückgüter im Großbehälter verblieben sind, andernfalls Entfernen bzw. Ausfördern des Großbehälters und allfälliges Bereitstellen eines weiteren, mit Stückgütern befüllten Großbehälters und erneute Durchführung des Kippzyklus.

Gemäß einer weiteren Ausführungsform kann das Mittel eine Behälterdetektionseinheit aufweisen, wobei die Behälterdetektionseinheit angeordnet und ausgestaltet sein kann, Stückgüter in einem auf den Aufnahmeabschnitt kippbaren Großbehälter, insbesondere nach dem Zurückkippen in diesem Großbehälter verbliebene Stückgüter, zu detektieren. Durch diese Behälterüberwachung kann verhindert werden, dass in dem Großbehälter Stückgüterverbleiben (bei in dem Großbehälter verbliebenen Stückgüterkann der Kippvorgang wiederholt werden), andererseits muss der Kippvorgang nicht unnötig lange wiederholt werden und bei leerem Großbehälter kann der Großbehälter sofort abtransportiert und einen allfällig neuen, befüllten Großbehälter ersetzt werden.

Gemäß einer weiteren Ausführungsform kann die Abführstrecke zwei oder mehr individuell antreibbare, bezüglich der Abführrichtung hintereinander angeordnete Abschnitte aufweisen und diese Abschnitte können mit Geschwindigkeitssprüngen betrieben werden, um einen Abstand der singulierten Stückgüter einzustellen.

Das Verfahren weist, soweit übertragbar, die gleichen Vorteile auf, welche bezüglich des Singulators und des Fördersystems aufgeführt sind. Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren, dem erfindungsgemäßen Singulator und dem erfindungsgemäßen Fördersystem kombinierbar. So sind Verfahrensmerkmale auch als Eigenschaft der entsprechenden Vorrichtungseinheit gegenständlich formuliert zu sehen und umgekehrt.

Ausführungsformen der Erfindung werden nachfolgend anhand der Figuren beispielsweise näher erläutert. Dabei zeigen:
- Figur 1: einen erfindungsgemäßen Singulator in Aufsicht;
- Figur 2: im seitlichen Schnitt nicht abschließend mögliche Ausführungsformen von relativer Anordnung und Neigung von Aufnahmeabschnitt, Segmentabschnitt und Abführstrecke;
- Figur 3: schematisch und in Aufsicht eine sequenzielle Ansteuerung der Segmente des Segmentabschnitts einer Ausführungsform des Singulators;
- Figur 4: ein Ausführungsform des erfindungsgemäßen Singulators.

Die folgenden Ausführungsformen beziehen sich exemplarisch auf Gepäckstücke 14, die Erfindung ist jedoch nicht auf Gepäckstücke 14 beschränkt, sondern kann für eine Vielzahl unterschiedlicher Stückgüter 14 realisiert werden. So ist jede der beschriebenen Ausführungsformen nicht nur für Gepäckstücke 14, sondern auch für allgemeine Stückgüter 14 ausführbar.

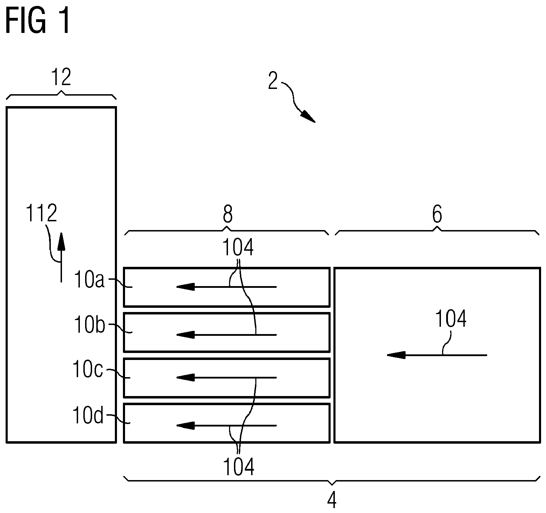

Der erfindungsgemäße Singulator 2 von Figur 1 weist eine Zuführstrecke 4 mit einem Aufnahmeabschnitt 6 mit einem ansteuerbaren Fördermittel, z.B. ein Förderband, und mit einem Segmentabschnitt 8 mit vier individuell ansteuerbaren Segmenten 10, die als Förderbänder oder andersartig ausgestaltet sein können, auf. Gepäckstücke 14 werden entlang der Zuführrichtung 104 vom Aufnahmeabschnitt 6 auf den Segmentabschnitt 8 und hin zum Ende des Segmentabschnitts 8 gefördert, vereinzelt auf die Abführstrecke 12 überführt und dort entlang der Abführrichtung 112 transportiert. Die Vereinzelung wird erreicht insbesondere durch eine individuelle Ansteuerung der Segmente 10 und zudem einen Winkel zwischen Zuführrichtung 104 und Abführrichtung 112. Gemäß einer Ausführungsform kann die Abführstrecke 12 mehrere entlang der Abführrichtung 112 hintereinander angeordnete Abschnitte aufweisen, um z.B. über Geschwindigkeitssprünge dieser Abschnitte einen Abstand der vereinzelten Gepäckstücke 14 einzustellen.

Ein Ende des Aufnahmeabschnitts 6 mündet in den Anfang des Segmentabschnitts 8. Der Aufnahmeabschnitt 6 wird ungeordnet mit Gepäckstücken 14 beladen, typischerweise durch Ausschütten eines Großbehälters, so dass die Gepäckstücke 14 auf dem Aufnahmeabschnitt 6 nicht nur nebeneinander, sondern auch übereinander liegen können. Eine Vereinzelung wird durch bevorzugtes und nicht-bevorzugtes Antreiben der Segmente 10 erzielt, so dass am Ende des Segmentabschnitts 8 die Gepäckstücke 14 einzeln auf die Abführstrecke 12 übergeben werden. Ein Auswählen der Segmente 10a, 10b, 10c, 10d als bevorzugte und nicht-bevorzugte Segmente 10 erfolgt entweder abhängig von der Anordnung der Gepäckstücke 14 auf dem Segmentabschnitt 8 (oder bei größerer Vorausplanung und Komplexität der Ansteuerung auch abhängig von der Anordnung der Gepäckstücke 14 auf dem Aufnahmeabschnitt 6), wobei die Anordnung durch eine vorzugsweise oberhalb des Segmentabschnitts 8 angeordnete Detektionseinheit 16 erfasst wird, oder als sequenzielle Auswahl der Segmente 10 als bevorzugtes Segment 10. Die nicht-bevorzugten Segmente 10 werden nicht bevorzugt angetrieben.

Nach dem Überführen eines oder aller auf dem bevorzugten Segment 10 aufliegenden Gepäckstücke 14 von dem Segmentabschnitt 8 auf die Abführstrecke 12 wird erneut ein Segment 10 als bevorzugtes Segment 10 ausgewählt, bevorzugt angetrieben und das zuvorderst in Bezug auf die Zuführrichtung 104 auf dem bevorzugten Segment 10 aufliegende ("bevorzugte") Gepäckstück 14 oder alle auf dem bevorzugten Segment 10 aufliegenden Gepäckstücke 14 auf die Abführstrecke überführt. Die beschriebenen Verfahrensschritte werden so lange durchgeführt, bis der Aufnahmeabschnitt 6 leer ist.

Bevorzugtes bzw. nicht-bevorzugtes Antreiben bedeutet ein Antreiben der bevorzugtem bzw. nicht-bevorzugtem Segmente 10 derart, dass ein in Zuführrichtung 104 zuvorderst auf dem bevorzugten Segment 10 aufliegendes Gepäckstück 14 als erstes auf die Abführstrecke 12 übergeben wird. Somit ist das bevorzugte Antreiben ein alleiniges oder schnelleres Antreiben als das nicht-bevorzugte Antreiben, wenn auf benachbarten Segmenten weitere Gepäckstücke 14 im Wesentlichen auf gleicher Höhe in Bezug auf die Zuführrichtung 104 aufliegen oder wenn die Position weiterer Gepäckstücke 14 nicht bekannt ist. Wenn auf den nicht-bevorzugten Segmenten 10 auf gleicher Höhe in Bezug auf die Zuführrichtung 104 keine weiteren Gepäckstücke 14 aufliegen, können zur Verfahrensbeschleunigung auch die nicht-bevorzugten Segmente 10 mit derselben Geschwindigkeit wie das bevorzugte Segment 10 angetrieben werden, da ja in diesem Fall kein auf den nicht-bevorzugten Segmenten 10 aufliegendes Gepäckstück 14 das oder die auf dem bevorzugten Segment 10 aufliegenden Gepäckstücke 14 überholen kann. Das nicht-bevorzugte Antreiben ist somit ein Anhalten und/oder ein gleich schnelles und/oder langsameres Antreiben als das bevorzugte Antreiben. Unterschiedliche nicht bevorzugte Segmente 10 können unterschiedlich angetrieben werden.

Ziel des Verfahrens ist es, dass auf der Abführstrecke 12 nur noch singulierte Gepäckstücke 14 aufliegen.

Bei einer Auswahl des bevorzugten Segments 10 abhängig von der Anordnung der Gepäckstücke 14 gemäß einer Ausführungsform wird zunächst die Anordnung der Gepäckstücke 14 durch eine Detektionseinheit 16 erfasst. Es wird dasjenige Segment 10 als bevorzugtes Segment 10 ausgewählt, auf dem stromabwärts in Bezug auf die Zuführrichtung 104 zuvorderst ein Gepäckstück 14 aufliegt. Dieses zuvorderst aufliegende ("bevorzugte") Gepäckstück 14 wird nun als erstes ("bevorzugt") durch bevorzugtes Antreiben des bevorzugten Segments 10 auf die Abführstrecke überführt. Wenn zwei oder Gepäckstücke 14 zuvorderst auf gleicher Höhe positioniert sind, wird gemäß einer Ausführungsform dasjenige Segment 10 als bevorzugtes Segment ausgewählt, auf dem in Bezug auf die Abführrichtung 112) zuvorderst ein Gepäckstück 14 aufliegt. Je nach Breite des Segmentabschnitts 8 kann gemäß einer weiteren Ausführungsform auch ein bevorzugtes Antreiben von mehr als einem Segment 10 erfolgen, da ja bei ausreichend breitem Segmentabschnitt 8 dennoch die Gepäckstücke 14 vereinzelt auf die Abführstrecke 12 überführt werden.

Nach dem Überführen des bevorzugten Gepäckstücks 14 oder aller auf dem bevorzugten Segment 10 aufliegenden Gepäckstücke 14 wird erneut die Anordnung der Gepäckstücke 14 durch eine Detektionseinheit 16 erfasst. Abhängig von der erfassten Anordnung der Gepäckstücke 14 wird dann auf gleiche Weise ein weiteres Segment 10 als bevorzugtes Segment 10 ausgewählt und die beschriebenen Verfahrensschritte wiederholt durchgeführt.

Beim erneuten Auswählen eines Segments als bevorzugtes Segment dem Überführen kann dasselbe oder ein weiteres Segment als bevorzugtes Segment ausgewählt werden. Bei einer Überwachung des Aufnahmeabschnitts 6 kann auch noch festgelegt und gesteuert werden, bei welchem Füllgrad des Aufnahmeabschnitts 6 erneut Gepäckstücke 14 auf den Aufnahmeabschnitt 6 eingebracht werden.

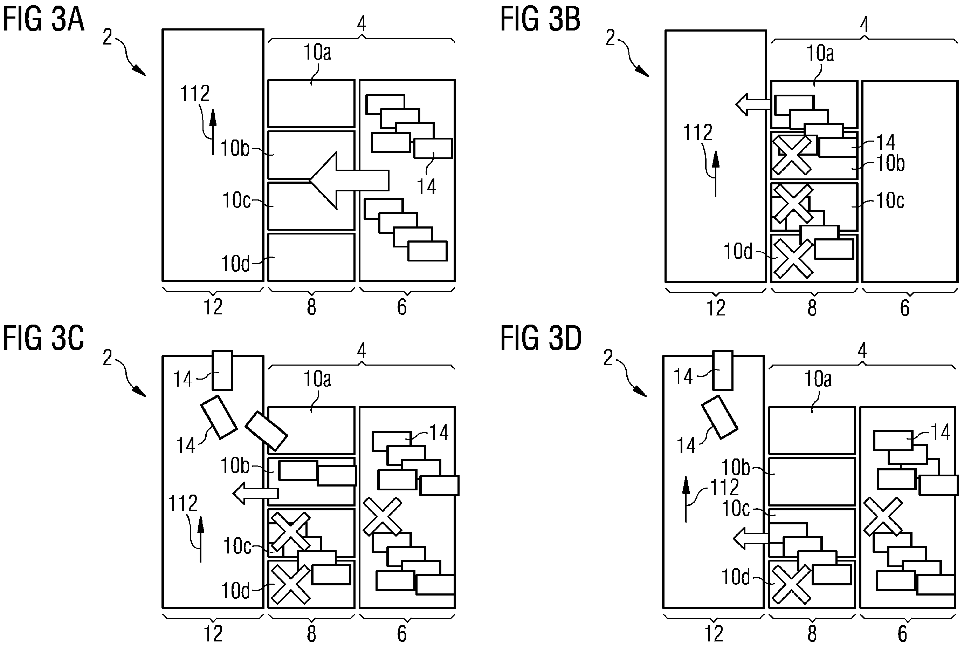

Figur 3 zeigt eine sequenzielle Auswahl der Segmente 104 als bevorzugtes Segment 10. Dieses Vorgehen bedingt nicht zwingend eine Erfassung der Anordnung der Gepäckstücke 14, aber eine Erfassung kann zur Verfahrensbeschleunigung dennoch hilfreich sein: so kann beispielsweise sofort ein weiteres Segment 10 als bevorzugtes Segment 10 ausgewählt werden, wenn auf dem zunächst bevorzugten Segment 10 kein Gepäckstück 14 aufliegt. Auch kann ein nicht bevorzugtes Segment 10 gleich schnell wie das bevorzugte Segment 10 angetrieben werden, wenn auf diesem in Bezug auf die Zuführrichtung 104 erst sehr viel weiter stromaufwärts ein Gepäckstück 14 aufliegt.

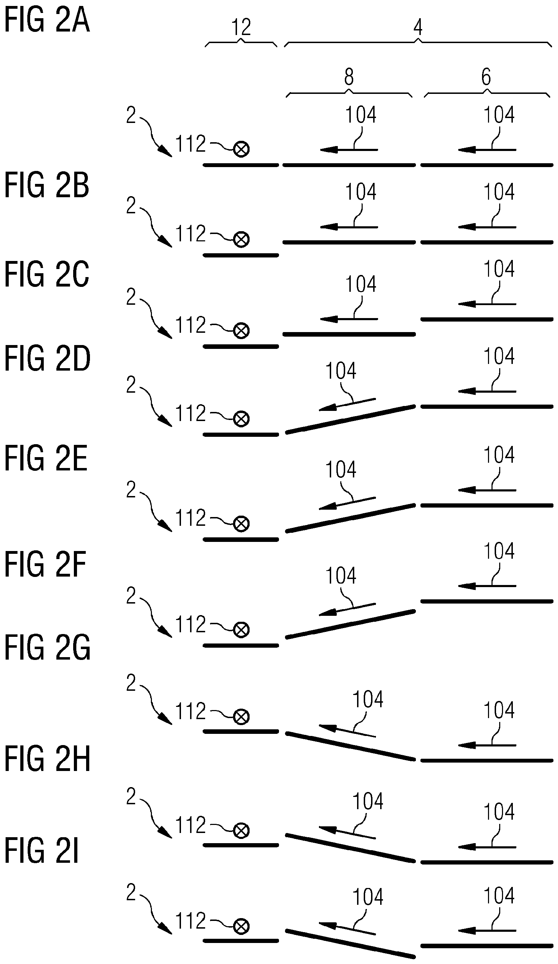

Zunächst wird der Aufnahmeabschnitt 6 angetrieben und die Gepäckstücke 14 werden auf den Segmentabschnitt 8 befördert (Figur 3a). Anschließend wird zunächst das in Bezug auf die Abführrichtung 112 zuvorderst / am weitesten flussabwärts angeordnete Segment 10a als bevorzugtes Segment 10a ausgewählt, dieses angetrieben während die anderen Segmente 10b, 10c, 10d nicht oder langsamer angetrieben werden (Figur 2b) so lange bis alle auf dem bevorzugten Segment 10a aufliegenden Gepäckstücke 14 auf die angetriebene Abführstrecke 12 überführt worden sind. Danach wird das Segment 10b neu als bevorzugtes Segment 10b ausgewählt, welches in Bezug auf die Abführrichtung 112 flussaufwärts unmittelbar neben dem bisher bevorzugten Segment 10a angeordnet ist. Alle auf diesem nun bevorzugten Segment 10b aufliegenden Gepäckstücke 14 werden durch (bevorzugtes oder alleiniges) Antreiben dieses Segments 10b auf die Abführstrecke 12 überführt (Figur 3c). Danach erfolgt das gleiche Vorgehen mit dem Segment 10c (Figur 3d) und anschließend mit dem Segment 10d (nicht gezeigt). Zur Verfahrensbeschleunigung wird schon während des Antreibens der Segmente der Aufnahmeabschnitt 6 wieder mit Gepäckstücken befüllt (Figur 3b und 3c), wobei dieses Befüllen auch erst nach vollständiger Entleerung des Segmentabschnitts 8 erfolgen kann. Nachdem das in Bezug auf die Abführrichtung 112 am weitesten flussaufwärts angeordnete Segment 10d als bevorzugtes Segment 10 ausgewählt worden ist (und somit flussaufwärts kein weiteres Segment 10 benachbart ist), wird wieder das in Bezug auf die Abführrichtung 112 am weitesten flussabwärts angeordnete Segment 10a als bevorzugtes Segment 10a ausgewählt. In der gezeigten Ausführungsform werden die Stückgüter 14 erst dann vom Aufnahmeabschnitt 6 auf den Segmentabschnitt 8 transportiert, wenn keine Stückgüter 14 mehr auf dem Segmentabschnitt 8 aufliegen.

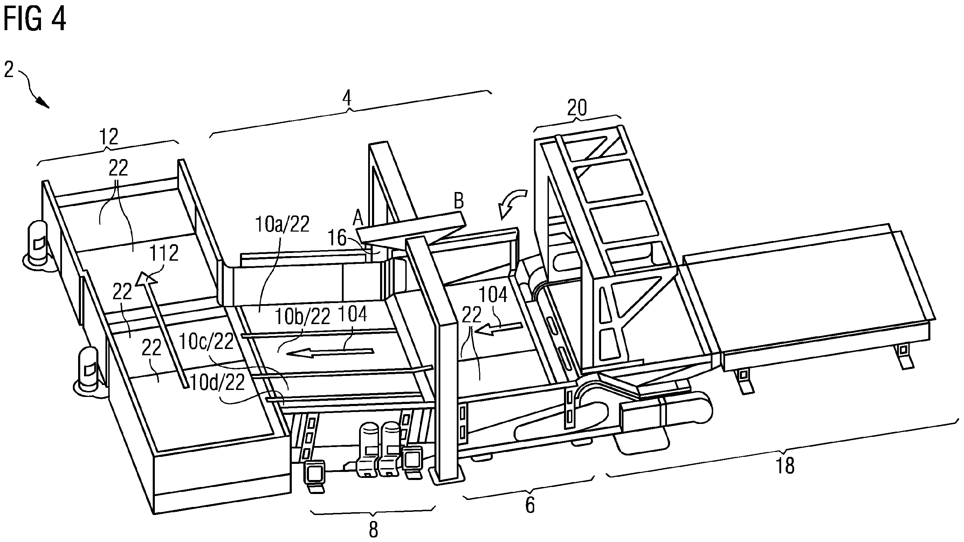

Figur 4 zeigt gemäß einer weiteren Ausführungsform einen Singulator 2. Die Abführstrecke 12 weist mehrere hintereinander entlang der Abführrichtung 112 angeordnete Förderbänder 22 auf, die mit Geschwindigkeitssprüngen angetrieben werden, um den Abstand der vereinzelten Gepäckstücke 14 einzustellen. Das Befüllen des Aufnahmeabschnitts 6 erfolgt mit Hilfe einer Kippvorrichtung 20, welche zur Aufnahme eines (nicht gezeigten) Großbehälters ausgestaltet ist. Die Kippvorrichtung 20 kippt den mit Gepäckstücken 14 gefüllten Großbehälter um eine am Anfang des Aufnahmeabschnitts 6, quer zur Zuführrichtung 104 angeordnete Kippachse herum, auf den Aufnahmeabschnitt 6 und befüllt so den Aufnahmeabschnitt mit Gepäckstücken 14, anschließend dreht die Kippvorrichtung 20 den Großbehälter zurück. Gemäß einer weiteren Ausführungsform wird vor dem Kippen der Kippvorrichtung 20 der Aufnahmeabschnitt 6 im Wesentlichen um die Kippachse herum hin zur Kippvorrichtung 20 gedreht und verschließt den Großbehälter. Anschließend werden gemeinsam Aufnahmeabschnitt 6 und Kippvorrichtung 20 samt Großbehälter um die Kippachse gedreht. Zurückgekippt/-gedreht werden anschließend nur Kippvorrichtung und Großbehälter. Auf diese Weise wird ein seitliches Herausfallen von Gepäckstücken 14 gut verhindert und die Gepäckstücke werden schonend behandelt.

Nach dem ersten Kippzyklus wird kontrolliert, typischerweise mit einer Behälterdetektionseinheit 16, ob Gepäckstücke 14 im Großbehälter verblieben sind und der Kippvorgang/-zyklus wird wiederholt falls nach dem Zurückkippen Gepäckstücke in dem Großbehälter verblieben sind. Wenn der Großbehälter vollständig entleert worden ist, wird dieser entfernt, typischerweise durch Ausfördern, und allfällig von einem weiteren, befüllten Großbehälter ersetzt. Dies kann während des Singulierens der Gepäckstücke 14 erfolgen.

Figur 2 zeigt eine nicht abschließende Auswahl möglicher Ausführungsformen von Neigung und Höhenversatz von Aufnahmeabschnitt 6, Segmentabschnitt 8 und Abführstrecke 12, wobei diese Ausführungsformen mit allen weiteren Ausführungsformen kombinierbar sind. Besonders bevorzugte Ausführungsformen stellen Figur 2c, 2i dar, da hier der Versatz zwischen den Abschnitten 6, 8, 12 dafür sorgt, dass die Gepäckstücke 14 ohne Verkanten zwischen den Abschnitten 6, 8, 12 von einem auf den nächsten Abschnitt überführt werden können. Der Segmentabschnitt 8 entlang der Abführrichtung ist horizontal oder fallend oder ansteigend ausgestaltet. Die Ausführungsformen mit geneigten Segmentabschnitten 8 führen zu einem Herabgleiten von aufeinander aufliegenden Gepäckstücken 14 und führen so zu einer Vereinzelung in der Höhe. Besonders vorteilhaft sind hierbei die Ausführungsformen mit entlang der Zuführrichtung ansteigendem Segmentabschnitt 8, da so die Gepäckstücke nur in Richtung des Aufnahmeabschnitts 6 heruntergleiten.

Gemäß einer weiteren Ausführungsform werden zwei oder mehr Segmente 10 als bevorzugtes Segment 10 ausgewählt und im Fall von benachbarten Segmenten 10 gleichartig und im Fall von nicht-benachbarten Segmenten 10 verschiedenartig oder gleichartig angetrieben. So kann der Singulator auch für größere Gepäckstücke 14, die auf mehr als einem Segment 10 aufliegen, herangezogen werden.

Gemäß einer Ausführungsform werden die in undefinierter Lage auf dem Förderband 22 des Aufnahmeabschnitts 6 liegende Stückgüter 14 zunächst auf ein spezielles in Längsrichtung in vier Teile 10a, 10b, 10c, 10d unterteiltes Förderband 8 transportiert. Der Nachschub (vom Aufnahmeabschnitt 6) wird über die Füllmenge vom Segmentabschnitt 8 geregelt. Der Segmentabschnitt 8 ist von einer darüber angebrachten Kamera 16 überwacht. Die Kamera 16 erkennt sowohl die einzelnen Segmente 10a, 10b, 10c, 10d des Förderbandes 22, 8 als auch das drauf liegende Stückgut 14. Abhängig von der Belegung werden nun die einzelnen Segmente 10a, 10b, 10c, 10d sequenziell nacheinander auf das im 90°angebrachte (normale) Abzugsband 12 abgefördert. Hierbei ist zu beachten, dass die Reihenfolge der Sequenz sich nach der Förderrichtung 112 des Abzugsbandes 12 richtet. Durch das sequenzielle Abfördern des Stückgutes 14 entsteht eine Vorvereinzelung, die im Nachgang mit einfachen Geschwindigkeitssprüngen vollvereinzelt werden kann. Das Kamerasystem stellt sicher, dass Sequenz und Bandgeschwindigkeit ideal auf den aktuellen Zustand angepasst werden. Das System optimiert eigenständig die Balance zwischen Leistung (Durchsatz) und Prozessqualität. Eine zweite Kamera schaut in den Großbehälter (in der Kippvorrichtung 20) um nach jedem Kippzyklus zu bewerten ob noch Stückgut 14 verblieben ist. Ist dies nicht der Fall wird der Prozess gestoppt und der Behälter ausgefördert. Dies reduziert die Zykluszeit drastisch.

### Bezugszeichenliste

- 2: Singulator
- 4: Zuführstrecke
- 6: Aufnahmeabschnitt
- 8: Segmentabschnitt
- 10: Segment
- 12: Abführstrecke
- 14: Gepäckstück
- 16: Detektionseinheit
- 18: Beladevorrichtung
- 20: Kippvorrichtung
- 22: Förderband/Fördervorrichtung
- 104: Zuführrichtung
- 112: Abführrichtung

## Patentansprüche

1. Verfahren zu Singulieren von Stückgütern (14), insbesondere Gepäckstücken (14), mit einem Singulator (2), umfassend eine einen Aufnahmeabschnitt (6) und einen Segmentabschnitt (8) aufweisende Zuführstrecke (4) mit einer Zuführrichtung (104) und eine Abführstrecke (12) mit einer Abführrichtung (112), wobei
- ein Ende des Aufnahmeabschnitts (6) in einen Anfang des Segmentabschnitts (8) mündet und auf gleicher Höhe oder oberhalb des Anfangs des Segmentabschnitts (8) angeordnet ist;
- ein Ende des Segmentabschnitts (8) quer oder schräg in die Abführstrecke (12) mündet und auf gleicher Höhe oder oberhalb der Abführstrecke (12) angeordnet ist;
- der Aufnahmeabschnitt (6) individuell antreibbar und zur Aufnahme einer Vielzahl ungeordneter Stückgüter (14) ausgestaltet ist;
- der Segmentabschnitt (8) mindestens zwei, insbesondere vier, individuell antreibbare, nebeneinander und parallel zur Zuführrichtung (104) des Segmentabschnitts (8) angeordnete Segmente (10) aufweist und sich ein Segment (10) jeweils vom Anfang bis zum Ende des Segmentabschnitts (8) erstreckt;
umfassend die Verfahrensschritte:
a) Befüllen des Aufnahmeabschnitts (6) mit einer Vielzahl ungeordneter Stückgüter (14);
b) Transportieren von Stückgütern (14) auf dem Aufnahmeabschnitt (6) entlang der Zuführrichtung (104) hin zum und auf den Segmentabschnitt (8);
c) Auswählen eines Segments (10) als bevorzugtes Segment (10) ;
d) bevorzugtes Antreiben des bevorzugten Segments (10) und nicht-bevorzugtes Antreiben der nicht bevorzugten Segmente (10) ;
e) Überführen von einem oder allen auf dem bevorzugten Segment (10) aufliegenden Stückgütern (14) auf die Abführstrecke (12) ;
f) wiederholte Durchführung der Verfahrensschritte c bis e.

2. Verfahren nach Anspruch 1, zudem umfassend den Verfahrensschritt
Erfassen einer Anordnung der Stückgüter (14) auf der Zuführstrecke (4), insbesondere auf dem Segmentabschnitt (8),
wobei das Auswählen des bevorzugten Segments (10) in Abhängigkeit von der erfassten Anordnung der Stückgüter (14) auf der Zuführstrecke (4), insbesondere auf dem Segmentabschnitt (8), erfolgt.

3. Verfahren nach Anspruch 2, **dadurch gekennzeichnet, dass** in Abhängigkeit von der erfassten Anordnung der Stückgüter (14) auf dem Aufnahmeabschnitt (6) der Zuführstrecke (4) eine Ansteuerung des Aufnahmeabschnitts (6) im Verfahrensschritt b) geregelt wird.

4. Verfahren nach einem der vorstehenden Ansprüche, **dadurch gekennzeichnet, dass**
das bevorzugte Segment (10) dasjenige Segment (10) ist, auf dem stromabwärts in Bezug auf die Abführrichtung (112) und/oder die Zuführrichtung (104) zuvorderst ein Stückgut (14) aufliegt.

5. Verfahren nach einem der vorstehenden Ansprüche, **dadurch gekennzeichnet, dass**
- im Verfahrensschritt c) zunächst das in Bezug auf die Abführrichtung (112) am weitesten flussabwärts angeordnete Segment (10) als bevorzugtes Segment (10) ausgewählt wird; und
- nach dem Überführen des einen oder aller auf dem bevorzugten Segment (10) aufliegenden Stückgüter (14) auf die Abführstrecke (12) im Verfahrensschritt e) dasjenige Segment (10) neu als bevorzugtes Segment (10) ausgewählt wird, das in Bezug auf die Abführrichtung (112) flussaufwärts unmittelbar neben dem bisher bevorzugten Segment (10) angeordnet ist und wenn flussaufwärts kein weiteres Segment (10) benachbart ist, das in Bezug auf die Abführrichtung (112) am weitesten flussabwärts angeordnete Segment (10) als bevorzugtes Segment (10) ausgewählt wird.

6. Verfahren nach einem der vorstehenden Ansprüche, **dadurch gekennzeichnet, dass**
- das bevorzugte Antreiben ein alleiniges oder schnelleres Antreiben als das nicht-bevorzugte Antreiben ist, wenn auf benachbarten Segmenten weitere Stückgüter (14) im Wesentlichen auf gleicher Höhe in Bezug auf die Zuführrichtung (104) aufliegen oder wenn die Position weiterer Stückgüter (14) nicht bekannt ist; und
- das nicht-bevorzugte Antreiben ein Anhalten und/oder ein gleich schnelles und/oder langsameres Antreiben als das bevorzugte Antreiben ist.

7. Verfahren nach einem der vorstehenden Ansprüche, zudem umfassend die Verfahrensschritte
Kippen eines mit Stückgüter (14) gefüllten Großbehälters um eine am Anfang des Aufnahmeabschnitts (6), quer zur Zuführrichtung (104) angeordnete Kippachse herum, auf den Aufnahmeabschnitt (6) und anschließendes Zurückkippen des Großbehälters.

8. Verfahren nach Anspruch 7, zudem umfassend die Verfahrensschritte
Drehen des Aufnahmeabschnitts (6) um die Kippachse derart, dass das Ende des Aufnahmeabschnitts (6) angehoben wird und der Aufnahmeabschnitt (6) den Großbehälter verschließt und anschließendes Zurückdrehen des Aufnahmeabschnitts (6) gemeinsam mit dem Großbehälter.

9. Verfahren nach einem der Ansprüche 7 bis 8, zudem umfassend die Verfahrensschritte
- Erfassen eines Füllgrads des Großbehälters nach dem Zurücckippen des Großbehälters;
- wiederholte Durchführung des Kippens und Zurückkippens des Großbehälters, wenn noch Stückgüter (14) im Großbehälter verblieben sind, andernfalls Entfernen des Großbehälters und allfälliges Bereitstellen eines weiteren, mit Stückgütern (14) befüllten Großbehälters.

10. Singulator (2) zum Singulieren von Stückgütern, insbesondere Gepäckstücken (14), umfassend
eine einen Aufnahmeabschnitt (6) und einen Segmentabschnitt (8) aufweisende Zuführstrecke (4) mit einer Zuführrichtung (104), eine Abführstrecke (12) mit einer Abführrichtung (112), wobei
- ein Ende des Aufnahmeabschnitts (6) in einen Anfang des Segmentabschnitts (8) mündet und auf gleicher Höhe oder oberhalb des Anfangs des Segmentabschnitts (8) angeordnet ist;
- ein Ende des Segmentabschnitts (8) quer oder schräg in die Abführstrecke (12) mündet und auf gleicher Höhe oder oberhalb der Abführstrecke (12) angeordnet ist;
- der Aufnahmeabschnitt (6) individuell antreibbar und zur Aufnahme einer Vielzahl ungeordneter Stückgüter (14) ausgestaltet ist;
- der Segmentabschnitt (8) mindestens zwei, insbesondere vier, individuell antreibbare, nebeneinander und parallel zur Zuführrichtung (104) des Segmentabschnitts (8) angeordnete Segmente (10) aufweist und sich ein Segment (10) jeweils vom Anfang bis zum Ende des Segmentabschnitts (8) erstreckt;
umfassend Mittel zur Durchführung des Verfahrens nach einem der Ansprüche 1 bis 9.

11. Singulator (2) nach Anspruch 10, **dadurch gekennzeichnet, dass**
das Mittel eine Detektionseinheit (16) aufweist, wobei die Detektionseinheit (16) oberhalb der Zuführstrecke (4), insbesondere oberhalb des Segmentabschnitts (8), angeordnet ist und zum Erfassen einer Anordnung der Stückgüter (14) auf der Zuführstrecke (4) ausgestaltet ist.

12. Singulator (2) nach einem der Ansprüche 10 bis 11, **dadurch gekennzeichnet, dass**
das Mittel eine Behälterdetektionseinheit (16) aufweist, wobei die Behälterdetektionseinheit (16) angeordnet und ausgestaltet ist, Stückgüter (14) in einem auf den Aufnahmeabschnitt (6) kippbaren Großbehälter, insbesondere nach dem Zurückkippen in diesem Großbehälter verbliebene Stückgüter (14), zu detektieren.

13. Singulator (2) nach einem der Ansprüche 10 bis 12,
**dadurch gekennzeichnet, dass**
das Mittel eine Steuereinheit aufweist, wobei die Steuereinheit ausgestaltet ist, Fördermittel des Aufnahmeabschnitts (6), der Segmente (10) und der Abführstrecke (12) anzusteuern.

14. Singulator (2) nach Anspruch 13, **dadurch gekennzeichnet, dass**
die Steuereinheit ausgestaltet ist, die Fördermittel in Abhängigkeit von den von den Detektionseinheiten (16) erfassten Stückgüter (14) anzusteuern.

15. Fördersystem, umfassend einen Singulator (2) nach einem der Ansprüche 10 bis 14.
